(19) Europäisches Patentamt
European Patent Office
Office européen des brevets

(11) EP 2 922 987 B1

(12) **FASCICULE DE BREVET EUROPEEN**

(45) Date de publication et mention de la délivrance du brevet:
**21.09.2016 Bulletin 2016/38**

(21) Numéro de dépôt: **13795237.0**

(22) Date de dépôt: **22.11.2013**

(51) Int Cl.:
***C25D 9/02*** *(2006.01)* ***C25D 13/12*** *(2006.01)*
***C09D 5/44*** *(2006.01)* ***C25D 13/18*** *(2006.01)*

(86) Numéro de dépôt international:
**PCT/EP2013/074517**

(87) Numéro de publication internationale:
**WO 2014/079989 (30.05.2014 Gazette 2014/22)**

(54) **PROCÉDÉ DE REVÊTEMENT DE LA SURFACE D'UN MATÉRIAU ORGANIQUE OU MÉTALLIQUE PAR DES COMPOSÉS ORGANIQUES PARTICULIERS PAR RÉDUCTION ÉLECTROCHIMIQUE DES IONS DIAZONIUM DESDITS COMPOSÉS ORGANIQUES, EN COURANT PULSÉ**

VERFAHREN ZUR BESCHICHTUNG DER OBERFLÄCHE EINES ORGANISCHEN ODER METALLMATERIALS MIT SPEZIELLEN ORGANISCHEN VERBINDUNGEN MITTELS ELEKTROCHEMISCHER IMPULSSTROMREDUKTION DER DIAZONIUMIONEN DIESER ORGANISCHEN VERBINDUNGEN

METHOD FOR COATING THE SURFACE OF AN ORGANIC OR METAL MATERIAL WITH PARTICULAR ORGANIC COMPOUNDS BY MEANS OF A PULSED-CURRENT ELECTROCHEMICAL REDUCTION OF THE DIAZONIUM IONS OF SAID ORGANIC COMPOUNDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2012 FR 1261240**

(43) Date de publication de la demande:
**30.09.2015 Bulletin 2015/40**

(73) Titulaires:
- **Université de Rennes I**
  **35065 Rennes Cedex (FR)**
- **Centre National de la Recherche Scientifique (CNRS)**
  **75794 Paris Cedex 16 (FR)**

(72) Inventeurs:
- **FLONER, Didier**
  **F-35530 Servon sur Vilaine (FR)**
- **GENESTE, Florence**
  **F-35510 CESSON SEVIGNE (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A1-92/13983** **FR-A1- 2 761 377**
**FR-A1- 2 829 046** **FR-A1- 2 933 425**

- **ESTELLE COULON ET AL: "Electrochemical Attachment of Organic Groups to Carbon Felt Surfaces", LANGMUIR, vol. 17, no. 22, 10 mai 2001 (2001-05-10), pages 7102-7106, XP055080178, ISSN: 0743-7463, DOI: 10.1021/la010486c**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 922 987 B1

## Description

### 1.Domaine de l'invention

La présente invention se rapporte à un procédé de revêtement de composé(s) organique(s) particulier(s) à la surface d'un matériau organique ou métallique de grande surface géométrique tel qu'un matériau poreux ou fibrillaire, par réduction électrochimique des ions diazonium desdits composés organiques, éventuellement formés in situ, en courant pulsé.

L'invention se rapporte également à des matériaux composites ainsi obtenus, et l'utilisation de tels matériaux pour la fabrication d'électrodes.

### 2. Art antérieur

Le greffage covalent de catalyseurs à la surface de matériau organique ou métallique présente un intérêt particulier dans le domaine de l'énergie, notamment pour la production de piles à combustible ou de batteries moléculaires. De nombreux procédés pour réaliser ce greffage ont été mis au point.

On connaît par exemple, le document WO92/13983 qui décrit un procédé de fonctionnalisation de la surface de matériaux carbonés par réduction électrochimique d'un sel de diazonium aromatique. Selon cette technique, le matériau carboné est mis en contact avec une solution du sel de diazonium dans un solvant aprotique. Le matériau carboné est ensuite polarisé négativement par rapport à une anode également en contact avec la solution du sel de diazonium. La réduction est réalisée à potentiel contrôlé (mode potentiostatique) sur des surfaces planes d'aire modérée (environ 1cm$^2$). Toutefois, ce procédé ne permet pas d'obtenir un revêtement homogène lorsque le matériau à revêtir est volumique et présente une grande surface géométrique, c'est à dire une aire supérieure ou égale à 10 cm$^2$.

De même, l'article Electrochemical Attachment of Organic Groups to Carbon Felt Surfaces, Estelle Coulon et al., Langmuir 2001 17 (22), 7102-7106, décrit un procédé d'électrogreffage en mode potentiostatique et en milieu aprotique, d'un composé présentant une fonction aryle et une fonction diazonium, à la surface des fibres d'un feutre de fibres de carbone, le feutre formant cathode sous la forme de disques ayant 22 mm de diamètre, c'est-à-dire une surface de 3.8 cm$^2$ environ.

Il est également connu du document WO01/59178 de modifier la surface d'un matériau métallique en y greffant des groupes aromatiques par réduction électrochimique d'un sel de diazonium aromatique. D'après ce document, le matériau métallique est mis en contact avec une solution du sel de diazonium dans un solvant aprotique ou protique acide. Le matériau métallique subit ensuite une polarisation négative par rapport à une anode également en contact avec la solution du sel de diazonium. La réduction peut être réalisée en mode intentiostatique, potentiostatique ou par voltamétrie cyclique répétitif. Toutefois, ce procédé ne permet pas non plus d'obtenir un revêtement homogène lorsque le matériau à revêtir est volumique et présente une grande surface géométrique.

En effet, la voltamétrie est d'abord une technique analytique, basée sur la variation constante du potentiel, tout en contrôlant chaque valeur du potentiel. Dans la pratique, elle n'est applicable que sur de petites surfaces, de l'ordre du mm$^2$. Par conséquent, plus la surface est grande, plus le potentiel est hétérogène. Cette technique n'est donc pas adaptée au traitement de matériaux dont la surface dépasse 10 cm$^2$ car elle ne permet pas d'obtenir un greffage homogène sur toute la longueur des fibres du matériau.

Plus précisément, lorsque les électrodes volumiques présentent une surface géométrique supérieure ou égale à 10 cm$^2$, et notamment supérieure ou égale à 100 cm$^2$, il devient difficile de contrôler correctement le potentiel à la surface du matériau à revêtir. Cela provient du fait qu'il est difficile de polariser de façon homogène une surface élevée. Cette difficulté est principalement liée à la conductivité électrique de la surface. Ce problème est encore plus critique lorsque le matériau est poreux comme le sont les feutres métalliques fibrillaires dont la surface spécifique développée dans le volume est de l'ordre de 1 m$^2$ par gramme de matériau. Non seulement le potentiel varie à la surface du matériau, mais également en profondeur. Il est donc très difficile d'obtenir un greffage homogène de molécules à la surface de matériaux poreux ou fibrillaires. Or, ces matériaux présentent un grand intérêt pour la production de piles et de batteries moléculaires à l'échelle industrielle car ils possèdent une surface spécifique élevée de par leur porosité ou la présence de fibres, tout en limitant le volume global du dispositif qui les englobe.

Il est donc nécessaire, à des fins d'exploitation industrielle, de surmonter cette limitation de la superficie des matériaux à traiter.

Par ailleurs, toutes ces techniques imposent l'utilisation d'une électrode de référence. Or, l'utilisation de telles électrodes ne permet pas d'obtenir un revêtement homogène des matériaux lorsque leur surface géométrique dépasse 10 cm$^2$. En effet, l'utilisation d'une électrode de référence se justifie par le contrôle du potentiel appliqué au matériau afin d'éviter tout écart par rapport à la valeur souhaitée. Ce contrôle du potentiel se fait par la mesure de la différence de potentiel entre l'électrode de travail et le point le plus proche de l'électrode de référence sur le matériau sur lequel s'effectue le greffage. Or, lorsque le matériau est faiblement ou moyennement conducteur, le potentiel en dehors de ce

point s'écarte très rapidement de la valeur souhaitée et rend inefficace toute modification en dehors de ce point ou du voisinage direct de ce point.

Enfin, le greffage des sels de diazonium en milieu hydro-organique nécessite l'utilisation d'un milieu acide, notamment un pH inférieur à 2. Cette forte acidité provoque spontanément la corrosion du matériau si celui-ci est métallique et donc sa dissolution sous forme cationique. Cela se traduit thermodynamiquement de la manière suivante: lorsque le métal M est plongé dans une solution aqueuse, la réaction de corrosion débute si le potentiel du couple $H^+/H_2$ est supérieur au potentiel du couple $M^{n+}/M$ ($E_{H^+/H2} > E_{M^{n+}/M}$) à un pH donné. Cette corrosion empêche un greffage efficace des molécules à la surface des matériaux métalliques.

## 3. Objectifs

L'invention a pour objectif de pallier au moins un des inconvénients ci-dessus énoncés.

Plus précisément, un objectif de l'invention est de proposer, dans au moins un mode de réalisation, un procédé permettant de greffer des molécules à la surface de matériau, organiques ou métalliques, poreux ou fibrillaires, dont la surface géométrique est supérieure ou égale à 10 $cm^2$.

Un autre objectif de l'invention est de proposer, dans au moins un mode de réalisation, un tel procédé qui permette d'éviter, ou à tout le moins, de limiter le phénomène de corrosion des matériaux métalliques.

Encore un objectif de l'invention est de proposer, dans au moins un mode de réalisation, un tel procédé qui permette d'obtenir un revêtement de tels matériaux homogènes.

L'invention a également pour objectif de proposer un tel procédé qui soit simple et peu onéreux à mettre en oeuvre.

## 4. Exposé de l'invention

La présente invention porte sur un procédé de revêtement d'un matériau organique ou métallique par greffage covalent d'au moins un composé organique A possédant au moins un groupe aromatique substitué par une fonction diazonium, sur une surface dudit matériau.

Selon l'invention, ledit matériau est poreux ou fibrillaire et présente une surface géométrique d'au moins 10 $cm^2$ de matériau ; et le procédé comprend une étape d'imposition en continu d'un courant non nul pulsé selon un mode intensiostatique à la surface du matériau pour réduire électrochimiquement l'ion ou les ions diazonium.

Ainsi, la présente invention repose sur le principe nouveau et original selon lequel des composés d'intérêt A, sous forme de sels de diazonium, sont fixés par électrogreffage de manière covalente à la surface d'un matériau organique ou métallique, poreux ou fibrillaire de grande surface géométrique. Le procédé d'électrogreffage ainsi proposé permet d'une part, d'obtenir un revêtement homogène à la surface des matériaux dont la surface géométrique est supérieure ou égale à 10 $cm^2$, et d'autre part de rendre possible le traitement de matériaux métalliques.

Au sens de l'invention, les matériaux poreux présentent une porosité sur l'ensemble de leur volume et non uniquement sur leur surface. Contrairement aux procédés classiques, le procédé selon l'invention peut être mis en oeuvre sur des matériaux présentant un volume tels que les matériaux fibrillaires et non uniquement des matériaux essentiellement plans.

Plus précisément, l'utilisation de la méthode pulsée employée selon le procédé de l'invention permet d'obtenir une meilleure homogénéité de greffage à la surface du matériau, notamment pour des matériaux présentant de grandes surfaces à recouvrir, tel que des matériaux poreux ou fibrillaires. En effet, un courant pulsé se caractérise par des temps d'imposition pendant lesquels le courant est non nul et des temps de repos pendant lequel le courant appliqué est nul. Pour un courant non nul, la concentration du composé A diminue en fonction du temps d'imposition. Cela entraine une diminution du composé A au voisinage de l'électrode. Les temps de repos permettent la diffusion naturelle des espèces à l'électrode jusqu'à retrouver la concentration de la solution initiale.

L'utilisation de la méthode pulsée employée selon le procédé de l'invention permet également d'éviter ou réduire le phénomène de corrosion observé lorsque le matériau à revêtir est métallique ou métallisé, grâce à l'imposition en continu d'un courant de réduction polarisant le matériau à un potentiel inférieur au potentiel de corrosion. Après greffage, le matériau métallique est protégé par un film organique limitant les phénomènes de corrosion. Ainsi, le procédé selon l'invention peut être mis en oeuvre aussi bien sur les matériaux organiques mais également sur les matériaux métalliques corrodables ou non. Contrairement aux techniques actuelles, le procédé selon l'invention permet de traiter tous types de matériaux. En effet, les procédés classiques ne permettent de traiter que les matériaux organiques ou métalliques non corrodables tel que l'or. Plus exactement, on observe un phénomène de corrosion avec les procédés actuels lors de l'électrodéposition notamment. La mise en oeuvre d'un courant non nul pulsé permet d'éviter ce phénomène de corrosion. Ainsi, le procédé selon l'invention peut également être mis en oeuvre sur des matériaux métalliques corrodables.

La mise en oeuvre d'un courant pulsé permet en outre de favoriser la réaction du greffage par rapport aux

réactions secondaires qui peuvent se produire, à savoir :

- la réduction de $H_3O^+$ en $H_2$, les protons pouvant provenir de l'acide utilisé pour préparer le sel de diazonium et/ou du milieu aqueux servant à solubiliser les ions nitrites ;
- la réduction des ions nitrites ; et
- la réduction du milieu organique.

Enfin, l'utilisation d'une méthode pulsée à courant imposé plutôt qu'une méthode à potentiel contrôlé permet de s'affranchir de l'utilisation d'une électrode de référence lors de l'étape de réduction électrochimique du sel de diazonium. Cette caractéristique permet notamment de pouvoir traiter des surfaces plus étendues que celles de l'art antérieur.
Par ailleurs, le procédé selon l'invention est facile à mettre en oeuvre et ne nécessite pas de préparer de manière indépendante des sels de diazonium des composés organiques à greffer à la surface du matériau.
Par "greffage covalent", on entend qu'il s'établit une liaison covalente entre le composé organique à greffer et la surface du matériau organique ou métallique à revêtir. Plus précisément la liaison se forme entre un groupe aromatique du composé organique et la surface du matériau. Lorsque le matériau est métallique, la nature de la liaison entre la surface et le groupe aromatique du composé organique qui la modifie est une liaison carbone-métal de type covalent. L'expression "carbone-métal" signifie une liaison forte non ionique obtenue par recouvrement des orbitales du carbone et du métal. Lorsque le matériau est organique, la nature de la liaison entre la surface et le groupe aromatique du composé organique qui la modifie est une liaison carbone-carbone de type covalent.
Le procédé selon l'invention comprend au moins deux étapes a) et b).
La première étape a) correspond à la préparation d'une composition de greffage. De préférence, la composition de greffage est préparée in situ, c'est à dire dans le milieu même dans lequel la réaction d'électro-réduction se produit. La composition de greffage comprend alors dans un milieu approprié au moins un composé organique possédant au moins un groupe aromatique substitué par une fonction diazonium. Ce dernier peut être représenté par la formule $A-N_2^+$, dans laquelle A est un composé organique comportant au moins un groupe arylique, sur lequel est substitué le groupe $N_2^+$. L'ion diazonium $A-N_2^+$ peut être préparé par exemple par diazotation à partir de nitrite $NO_2^-$ et d'un composé aminé $A-NH_2$ dans lequel A est tel que défini précédemment, en milieu acide. La réaction peut s'écrire de la manière suivante:

$$A-NH_2 + NO_2^- + 2H^+ \rightarrow A-N_2^+ + 2H_2O$$

De préférence, la concentration en catalyseur varie entre 5. $10^{-4}$ mol/L et $10^{-2}$ mol/L. Des concentrations en catalyseur inférieures à 5. $10^{-4}$ mol/L seraient insuffisantes pour obtenir un greffage efficace. A l'inverse, les sels de diazonium en concentration supérieure à $10^{-2}$ mol/L seraient insolubles. De même, la concentration en acide est préférentiellement comprise entre $10^{-3}$ mol/L et $10^{-1}$ mol/L et la concentration en nitrite est de préférence comprise entre $10^{-3}$ mol/L et $10^{-1}$ mol/L.
Toutefois, il est préférable que la concentration en nitrite soit 2,5 fois supérieure à la concentration en catalyseur A et la concentration en proton soit 5 fois plus élevée que la concentration en catalyseur A.
La deuxième étape b) correspond au greffage covalent réalisé par réduction électrochimique de l'ion diazonium du composé organique formé in situ. Le radical formé A• réagit aussitôt avec la surface du matériau porté à un potentiel électrique cathodique. Le mécanisme mis enjeu est le suivant:

$$A-N_2^+ + e^- \rightarrow A^\bullet + N_2$$

$$A^\bullet + surface\ du\ matériau \rightarrow A - surface\ du\ matériau$$

Au final, le composé organique A est lié de façon covalente sur la surface du matériau. Concrètement, la réduction a lieu au niveau de la cathode d'un électrolyseur.
Dans un électrolyseur, on appelle anode, l'électrode qui est reliée à la borne positive du générateur extérieur et où se produit la réaction d'oxydation; et on appelle cathode, l'électrode qui est reliée à la borne négative du générateur extérieur et où se produit la réaction de réduction.

La cathode de l'électrolyseur utilisé est recouverte ou constituée du matériau organique ou métallique à revêtir. A la fin de l'étape b), la surface du matériau est recouverte entièrement et de manière homogène du composé organique A.
Le choix du composé organique A dépend en particulier de l'utilisation finale du matériau obtenu par le procédé selon l'invention. En particulier, le composé organique utilisé peut présenter une activité catalytique ou une activité complexante vis-à-vis des cations appartenant aux métaux de transition (bloc d du tableau périodique), aux éléments appartenant aux colonnes 1 (alcalins) et 2 (alcalinoterreux) du tableau périodique et aux éléments appartenant à la famille des lanthanides. L'activité catalytique reste conservée même après greffage sur le matériau via le procédé selon l'invention.
Dans un mode de réalisation avantageux du procédé selon l'invention, l'étape d'imposition d'un courant non nul pulsé est réalisée par cycles successifs, chaque cycle comprenant :

- une phase de greffage de durée $\Delta t_1$ lors de laquelle l'intensité du courant ($i_1$) appliqué est choisie de manière à polariser la surface du matériau à un potentiel $E_1$ permettant la réduction du sel de diazonium et le greffage du groupe aromatique substitué par ledit sel de diazonium sur la surface dudit matériau, pendant une durée d'imposition $\Delta t_1$ non nulle, et
- une phase de repos de durée $\Delta t_2$ lors de laquelle l'intensité du courant appliqué ($i_2$) est inférieure à l'intensité $i_1$, pendant une durée de repos $\Delta t_2$ non nulle.

Ce procédé est particulièrement avantageux pour le revêtement homogène de matériaux poreux ou fibrillaires plans présentant une aire supérieure ou égale à 10 $cm^2$.
Le nombre de cycle est choisi de préférence de façon à obtenir un recouvrement complet du matériau organique ou métallique. En général, le procédé selon l'invention comprend une répétition de 10 cycles.
Le choix de l'intensité imposée $i_1$ et de la durée d'imposition $\Delta t_1$ permet de favoriser la réaction de greffage par rapport aux autres réactions concurrentes.
De préférence, la valeur de l'intensité $i_1$ est donnée en ampère, par la relation suivante:

$$i_1 = k \times m,$$

où :

- m = la masse du matériau organique ou métallique en gramme,
- k est une constante égale à 2 ampères par gramme de matériau métallique et égale à 5 ampères par gramme de matériau organique.

Avantageusement, la valeur de l'intensité $i_2$ est choisie de manière à ce qu'elle soit inférieure ou égale à 0,05 fois la valeur de l'intensité $i_1$. Lorsque le matériau est organique, $i_1$ est nul.
De préférence, $i_2$ est différent de zéro lorsque le matériau est métallique mais $i_2$ est nul lorsque le matériau est un feutre de graphite.
Dans un mode de réalisation préféré de l'invention, la durée d'imposition $\Delta t_1$ est choisie de manière à satisfaire la relation suivante:

$$\Delta t_1 = k_t \times t_b,$$

dans laquelle :

- $k_t$ = (A) / $C_{min}$, où (A) représente la concentration du composé organique A en mole par litre et $C_{min}$ représente la concentration minimale en ions diazonium.
- $t_b$ représente une valeur constante en temps.

De préférence, $t_b$ est égal à au moins 100 microsecondes et préférentiellement égal à 500 microsecondes lorsque A est une phthalocyanine.
De préférence, la concentration minimale en ions diazonium $C_{min}$ est comprise entre 5. $10^{-4}$ mol/L et $10^{-2}$mol/L, et de manière plus préférée, $C_{min}$ est égale à 5. $10^{-4}$ mol/L.
La durée $\Delta t_2$ est choisie de manière à permettre un retour de concentration en composé organique au niveau de l'électrode. Dans un mode de réalisation avantageux, la durée d'imposition $\Delta t_1$ est comprise entre 100 microsecondes

et 30 secondes, de préférence entre 0,5 seconde et 10 secondes et/ou la durée de repos $\Delta t_2$ est comprise entre 1 seconde et 5 minutes.

De préférence, la durée d'imposition $\Delta t_2$ est 10 fois supérieure au temps d'imposition du courant $\Delta t_1$.

Le procédé est réalisé selon un mode stationnaire c'est-à-dire à lit fixe entre le matériau à modifier et une contre électrode. De préférence, la contre électrode est en graphite.

Avantageusement, le composé organique A est choisi parmi les molécules insolubles ou très peu soluble dans l'eau comportant au moins une fonction aryle amine. En particulier, le composé organique A est choisi parmi les molécules macrocycliques hydrocarbonés ou hétéroatomiques comportant chacun un ou plusieurs, de préférence quatre noyaux benzéniques condensés avec un noyau mono- ou poly-azolique, lesdits noyaux mono- ou poly-azoliques étant reliés entre eux par un pont monoatomique choisi parmi les groupes suivants: amine, imine (-N=), méthylène ($-CH_2-$), ou méthine (-CH=).

Plus préférentiellement, le composé organique A est choisi parmi les catalyseurs macrocycliques possédant un centre métallique au centre de la molécule et appartenant aux familles des phtalocyanines, porphyrines, calixarènes, éther couronnes et cyclopeptides.

On entend par « macrocycle » une macromolécule cyclique dans laquelle se trouve une cavité, cette cavité pouvant être libre ou occupée par un ion, un atome ou une autre molécule. Parmi les macrocycles, on utilise préférentiellement les macrocycles organométalliques, c'est à dire une macromolécule dont la cavité est occupée par un cation métallique.

Avantageusement, le milieu approprié comprend un solvant protique, un solvant aprotique et un électrolyte-support nécessaire pour effectuer la réduction électrochimique.

De manière d'avantage préféré, le solvant aprotique représente au moins 90% en volume du milieu et de manière encore plus préférée, le solvant aprotique représente au moins 98% en volume du milieu.

On entend par « milieu approprié » tout milieu susceptible de solubiliser les composés organiques à greffer sur la surface du matériau et les réactifs nécessaires à la préparation des ions diazonium desdits composés organiques comme les ions nitrites, dans les conditions opératoires du procédé selon l'invention (pression atmosphérique, température à 25°C). En particulier, ledit milieu approprié est choisi de manière à solubiliser un maximum de composés organiques. Le milieu approprié est tel qu'il permet d'obtenir des concentrations en composés organiques allant jusqu'à $5.10^{-4}$ mol/L, et de préférence variant de $5.10^{-4}$ mol/L à $10^{-2}$ mol/L à 25°C.

De préférence, la concentration en nitrite et en acide étant au moins deux fois supérieure à la concentration en composé aminé $A-NH_2$. De manière également préférée, la concentration en proton est au moins 5 fois supérieure à la concentration en composé aminé $A-NH_2$.

A titre de solvant protique, on peut citer de l'eau. Le solvant protique préféré est l'eau acidifiée par divers acides forts tels que l'acide sulfurique $H_2SO_4$, l'acide chlorhydrique HCl ou l'acide fluoroborique $HBF_4$.

A titre de solvant aprotique, on peut citer les solvants organiques polaires tels que le diméthylformamide (DMF), l'acétonitrile, le diméthylsulfoxyde (DMSO). Le solvant aprotique préféré est le diméthylformamide.

A titre d'exemple d'électrolyte-support convenant pour la mise en oeuvre de l'invention, on peut citer par exemple un sel de tétrafluoroborate alcalin ($NaBF_4$), un sel d'ammonium quaternaire ou alcalin, comme un tétra-fluoroborate, perfluorate, hexafluorophosphate de lithium ou sodium ou de tétraalkylammonium. De préférence, le sel utilisé est le sel de tétrafluoroborate alcalin $NaBF_4$. En effet, ce sel se dissout dans le DMF et dans l'eau. L'ensemble solvant + eau + $NaBF_4$ devient alors un milieu conducteur. De plus, ce sel est peu onéreux et l'anion $BF_4^-$ permet de stabiliser le sel de diazonium formé grâce à une interaction entre la charge positive du sel de diazonium et l'anion. Lorsque le sel de tetrafluoroborate alcalin est utilisé comme électrolyte-support, sa concentration est comprise entre 0,1 mol/L et 0,5 mol/L, et de préférence est égale à 0,25 mol/L.

De préférence, le milieu approprié est un mélange solvant organique / eau dans un rapport volumique (90/10).

Lorsque le composé organique à greffer est une phtalocyanine, le milieu avantageusement choisi est un mélange DMF/eau dans un rapport volumique (90/10). Le DMF permet de solubiliser les composés organiques et les ions diazonium correspondant. La partie aqueuse du mélange permet d'obtenir une réactivité suffisante des ions nitrites pour former les ions diazonium de la phtalocyanine. Ce mélange permet donc d'atteindre une concentration optimale de $10^{-2}$ mol/L en phtalocyanines dissous tout en conservant une réactivité suffisante des ions nitrites pour former les ions diazonium de la phtalocyanine.

Lorsque les ions diazonium du composé organique A sont formés in situ par diazotation de nitrites en milieu acide, la composition de greffage utilisée dans le procédé selon l'invention comprend au moins un nitrite et au moins un acide.

Le matériau destiné à être revêtu par le procédé selon l'invention peut être organique ou métallique. En particulier, le matériau utilisé est un matériau de grande surface spécifique tel qu'un matériau poreux ou fibrillaire. Le matériau métallique destiné à être revêtu par le procédé selon l'invention peut être corrodable ou non.

Dans un mode de réalisation préféré, le matériau organique peut être choisi parmi les mousses, les feutres, les superpositions de tissus, de préférence les feutres de fibre de carbone et les feutres de fibre de graphite.

Le matériau se présente de préférence sous la forme d'une plaque. La surface géométrique de la plaque dépasse généralement 10 $cm^2$. L'épaisseur de la plaque varie de préférence de 0,1 à 12 mm.

Lorsque la porosité du matériau est mesurable, le matériau présente de préférence une porosité maximale de 90%.

A titre de feutre en fibres de graphite, utilisable, on peut citer ceux commercialisés par les sociétés Mersen ou VEOLIA. Il existe en vente deux épaisseurs disponibles: 12 mm commercialisé par la société Mersen sous la référence RVG 4000 et 6 mm correspondant au RVG 2000. Mise à part l'épaisseur, ces matériaux sont exactement identiques. Ces feutres sont constitués d'un enchevêtrement de fibres de graphite. La porosité très élevée du feutre est difficilement quantifiable et correspond plus à des espaces entre fibres, de plus ou moins grandes dimensions, plutôt qu'à des pores de diamètre bien défini.

La surface apparente évaluée par la société Mersen (par la méthode dite B.E.T.) est de 0,7 $m^2.g^{-1}$. L'aspect global de chaque fibre dont le diamètre moyen se situe entre 20 et 25 microns est d'apparence très homogène. Ces fibres dont la fabrication est propre à Mersen sont obtenues par une pyrolyse d'un polymère de base acrylique.

Les feutres proposés par la société VEOLIA sont également commercialisés en rouleau, mais avec une épaisseur maximale de 0,3 cm. Un des feutres commercialisé par VEOLIA se caractérise par une très grande surface spécifique de 1200 $m^2.g^{-1}$, mesurée, selon VEOLIA, par la méthode B.E.T., ce qui correspond à une surface environ 1700 fois plus grande que les feutres de graphite Mersen. Ceci s'explique par le fait que le diamètre moyen des fibres est petit, environ 10 microns et que la densité en fibres est élevée.

Dans une variante avantageuse, le procédé selon l'invention comprend en outre une étape préalable de métallisation du matériau organique par électrodéposition d'au moins un métal, de préférence réalisée in situ, avant la mise en oeuvre du procédé selon l'invention.

La métallisation du matériau organique peut donc être réalisée en amont du procédé selon l'invention, par exemple par les méthodes de préparation décrites dans les demandes de brevet FR0213034, FR2846012 et FR1155040.

De préférence, le matériau est un matériau métallique qui présente un potentiel standard mesuré par électrode standard à hydrogène à 25°C inférieur à zéro, choisi parmi l'étain, l'indium, le molybdène, le gallium, le vanadium, le nickel, le cobalt, le thallium, le cadmium, le fer, le bismuth, le chrome, le zinc, de préférence le nickel, le cobalt et le cuivre.

Parmi tous les matériaux utilisables dans le procédé selon l'invention, le matériau est préférentiellement choisi parmi les feutres de fibre de carbone et les feutres de fibre de carbone métallisé, et mieux encore parmi les feutres de fibre de graphite et les feutres de fibre de graphite métallisé.

Pour réaliser la réduction électrochimique de l'ion diazonium du composé organique à greffer, on peut employer n'importe quel électrolyseur conventionnel, tels que ceux habituellement utilisés pour procéder à des électrodépositions. L'électrolyseur généralement utilisé est composé d'une cellule électrochimique munie de deux électrodes. Les électrodes sont connectées aux bornes d'un générateur de courant électrique et baignent chacune dans un milieu conducteur approprié. La nature du milieu approprié est telle que définie précédemment. Ainsi, il n'est pas nécessaire de concevoir de dispositifs spécifiquement dédiés à la mise en oeuvre du procédé selon l'invention.

La présente invention porte également sur un matériau organique ou métallique, poreux ou fibrillaire, présentant une surface géométrique d'au moins 10 $cm^2$ et revêtu selon le procédé de l'invention. La présente invention porte notamment sur une électrode électrochimique revêtue ou composée d'un tel matériau. En particulier, les matériaux fibrillaires greffés par des catalyseurs selon le procédé selon l'invention trouvent un intérêt particulier dans le développement des piles/batteries à électrolyte circulant.

Le matériau catalytique obtenu présente les qualités suivantes :

- légèreté car l'ajout de catalyseur ne change pas la masse du matériau support
- souplesse car l'ajout de catalyseur ne rigidifie pas le matériau. Il peut donc être soumis mécaniquement à différentes formes sans être altéré.
- bonne conductivité électrique du matériau, surtout si le matériau support est un feutre métallisé au préalable par du nickel.
- dispersion homogène des catalyseurs sur toute la surface du matériau.

L'épaisseur de la couche est équivalente au minimum à l'épaisseur d'une mono couche moléculaire. Ce qui correspond à priori à la taille de la molécule utilisée. Si le temps d'électrolyse est trop élevé cela peut conduire à la formation de multi couche. Un empilement trop important des molécules (catalyseurs) conduit à une passivation du matériau. Pour éviter ce phénomène, il faut réaliser au maximum 10 cycles d'électrolyse ou un cycle correspond au temps : t (électrolyse) = $\Delta t_1 + \Delta t_2$

En conclusion : l'activité catalytique de ces matériaux est optimale sur toute la surface. Grâce à la structure en 3 dimensions de ces matériaux la réponse de l'ensemble des catalyseurs est très importante pour un petit volume de matériau.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 est un graphique illustrant les résultats de l'oxydation de l'hydrazine sur graphite et sur nickel en absence et en présence de catalyseur.
- la figure 2 est un graphique présentant les résultats de l'oxydation de l'hydrazine sur nickel en absence et en présence de catalyseur.
- La figure 3 est un graphique illustrant les résultats de la réduction du dioxygène sur carbone vitreux.
- La figure 4 est un graphique illustrant les résultats de la réduction du dioxygène sur un feutre métallisé au nickel.
- La figure 5 est un graphique représentant les résultats de l'analyse voltampérométrique de la réduction du dioxygène en peroxyde d'hydrogène.
- La figure 6 est un graphique illustrant les résultats de l'analyse voltampérométrique d'une solution de peroxyde d'hydrogène par une électrode de nickel modifiée par la 2-aminoanthraquinone.

## 6. Exemples de mode de réalisation de l'invention

Le principe général de l'invention repose sur l'utilisation d'un courant non nul et pulsé, à courant imposé, permettant de greffer des sels de diazonium en milieu hydro-organique acide sur des matériaux organiques ou métalliques, poreux ou fibrillaires, dont la surface spécifique est au moins égale à 10 $cm^2$. Les exemples suivants servent à illustrer l'invention sans toutefois présenter un caractère limitatif.

<u>6.1 Mise en évidence de l'efficacité du greffage de catalyseurs sur matériau organique et métallique.</u>

Une série d'expérience a été menée pour greffer des dérivés de phtalocyanines sur matériau organique comme le graphite ou métallique comme le nickel, et tester l'efficacité du greffage en mesurant l'activité catalytique de ces composés une fois greffés vis à vis de l'oxydation d'une hydrazine.

L'hydrazine est un réducteur qui s'oxyde selon le schéma suivant :

$$NH_2 - NH_2 \rightarrow N_2 + 4H^+ + 4e^-$$

Les dérivés de phtalocyanines testés sont synthétisés en laboratoire et représentés ci-dessous. Le coeur $Mn^+$ représente un ion métallique, de préférence $Co^{2+}$ ou $Fe^{2+}$.

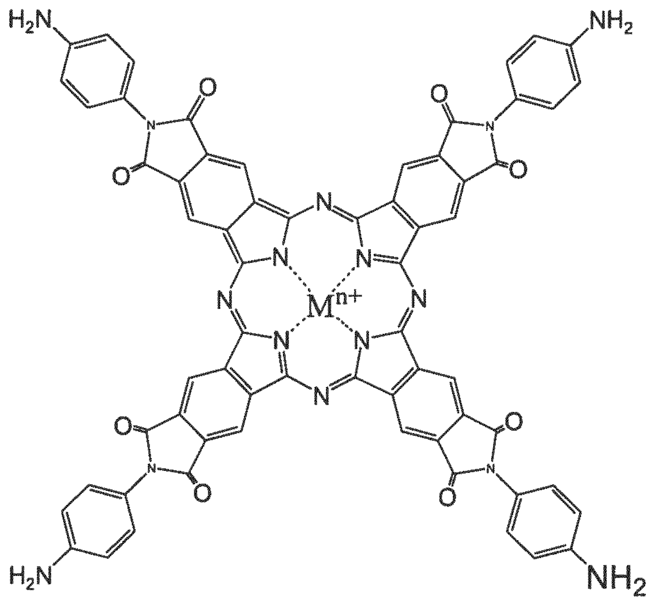

Le choix d'utiliser ces composés s'explique par le fait qu'il a été observé que l'activité catalytique des dérivés

phtalocyanines vis-à-vis de l'oxydation de l'hydrazine était optimum lorsque le métal inséré dans le macrocycle est $Co^{2+}$ ou $Fe^{2+}$.

En outre, ces composés organiques possèdent quatre chaînes terminées chacune par une fonction amine de type aniline. Il y a donc pour chaque composé quatre possibilités d'ancrage par réduction électrochimique des ions diazonium correspondant sur la surface d'un matériau.

Le procédé de revêtement selon l'invention a été mis en oeuvre selon le protocole opératoire suivant. On utilise un feutre métallisé au nickel de forme sphérique de diamètre de 10 cm est d'épaisseur 3 mm et de masse 5,5 g. Ce feutre est immergé dans 1 litre d'une solution de phtalocyanine de concentration égale à $10^{-3}$ mol/L.

Il est à noter que pour une concentration de phtalocyanine de $10^{-3}$ mol/L équivaut à une concentration en aniline de $4.10^{-3}$ mol/L. Les paramètres mis en oeuvre sont les suivants :

- $i_1 = 11$ A
- $k_t = 8$
- $At_1 = 4$ s
- $i_2 = 0{,}55$ A
- $\Delta t_2 = 40$ s

Composition de la solution de greffage:

Les solutions A et B sont préparées séparément puis mélangées selon le pourcentage en volume: 90% de solution A et 10% de solution B. La composition de chaque solution est indiquée ci-dessous :

a) solution A: 900 ml de DMF dans lequel est dissous 1,2 g de phtalocyanine (Masse molaire = 1206 $g.mol^{-1}$) pour obtenir une concentration finale de $10^{-3}$ $mol.L^{-1}$, ainsi que 27,5 g de $NaBF_4$ (Masse molaire = 110 $g.mol^{-1}$) pour obtenir une concentration finale de 0,25 $mol.L^{-1}$.

b) solution B:100 ml d'une solution aqueuse mélangée au 900 ml de DMF en deux fois:

- premier ajout de 80 ml d'une solution de nitrite de sodium à 0,125 $mol.L^{-1}$pour une concentration finale, après dilution dans le DMF, égale à $10^{-2}$ $mol.L^{-1}$ ;
- deuxième ajout de 20 ml d'une solution d'un acide fort à 1 $mol.L^{-1}$ pour une concentration finale, après dilution dans le DMF, égale à 0,2 $mol.L^{-1}$.

Lorsque le deuxième ajout est réalisé, un temps d'attente de 10 mn est nécessaire avant de débuter l'électrolyse. Ce temps d'attente est nécessaire car la synthèse in situ des sels de diazonium n'est pas instantanée.

La figure 1 rassemble une série d'expériences confirmant d'une part que les catalyseurs une fois greffés ne perdent pas leur activité et montrant d'autre part l'efficacité du catalyseur et par conséquent la réussite du greffage covalent des phthalocyanines sur les deux matériaux (graphite et nickel). Les analyses sont réalisées sur des échantillons d'électrode de surface géométrique d'environ 0,1 $cm^2$. L'intensité I est exprimée en milliampères (mA) et le potentiel E est exprimé en volt (V) contre une électrode au calomel saturé (ECS).

Les courbes du graphique à la figure 1 représentent l'oxydation directe de l'hydrazine sur graphite et sur nickel ainsi que l'oxydation de l'hydrazine après avoir greffé le catalyseur à la surface des matériaux. Il est à noter un meilleur résultat obtenu avec des catalyseurs bloqués sur nickel qui se traduit par un décalage vers les potentiels négatifs de la courbe d'environ 150 mV par rapport à la courbe obtenue sur graphite modifié par le catalyseur.

Ainsi, il a été démontré que le procédé selon l'invention permet de greffer efficacement des catalyseurs phtalocyanines sur graphite et nickel.

6. 2 Mise en évidence de l'homogénéité du greffage de catalyseurs sur matériau organique et métallique

L'homogénéité du greffage sur nickel a été démontrée en mesurant les propriétés anti-corrosives obtenues après greffage. Il est important d'obtenir un revêtement le plus homogène possible, car le phénomène de corrosion se produit au niveau des zones non revêtues par le greffage. L'hydrazine est un complexant très fort qui provoque la corrosion d'un métal, ce qui est le cas pour le nickel, figure 2. En absence de catalyseur, le nickel montre un domaine de corrosion situé entre -1,1 V et -0,6 V. Ce phénomène est bien connu et apparaît du fait du pouvoir complexant de l'hydrazine sur le nickel qui abaisse considérablement le potentiel de corrosion. En présence du catalyseur la corrosion disparaît. Une modification en surface permet également de protéger le métal.

Ainsi, il a été démontré que le procédé selon l'invention permet de passiver de manière homogène un matériau métallique.

6.3 Réduction du dioxygène $O_2$ dans une solution de soude à 1 mol/L

La réduction du dioxygène est mise en oeuvre dans les piles à combustible, généralement en milieu basique concentré. La réaction de réduction correspondant au pôle positif de la pile est la suivante :

$$O_2 + 4H^+ + 4e^- \rightarrow 2H_2O \quad E° = 1,23 \text{ V/ESH}$$

En fonction du pH le dégagement d'oxygène est relié à la formule : $E_{O2/H2O}$= 1,23 - 0,06 pH. En conséquence dans une solution à pH = 14, le dégagement de dioxygène débute théoriquement à 0,39 V/ESH. En pratique cette valeur n'est jamais obtenue et le meilleur résultat est obtenu sur platine avec un potentiel de réduction de l'ordre de 0,1 V/ESH à pH = 14.

Deux séries d'expériences ont été réalisées afin de comparer l'influence du greffage sur la réduction du dioxygène. Pour chaque expérience, la réduction du dioxygène en milieu fortement basique a été réalisée en utilisant soit une électrode non modifiée, soit la même électrode modifiée par greffage de sels diazonium. Par ailleurs, deux types de matériaux différents ont été utilisés : une électrode en carbone vitreux et une électrode en nickel.

Pour ces deux électrodes lorsqu'elles étaient modifiées, la solution de greffage des phthalocyanines était la même et présentait la composition suivante :

- phthalocyanine de cobalt à la concentration $5.10^{-4}$ $mol.L^{-1}$ dans une solution de DMF contenant $NaBF_4$ à la concentration de 0,5 $mol.L^{-1}$.
- 1% en volume d'une solution de nitrite de sodium à 1 $mol.L^{-1}$.
- 1% en volume d'une solution d'acide sulfurique à 0,5 $mol.L^{-1}$.

Comme on peut le constater à la vue de la figure 3, le greffage des phthalocyanines sur la surface de l'électrode améliore la réduction du dioxygène par rapport à l'électrode non modifiée. Cette amélioration se caractérise par un potentiel de début de réduction vers 0 V/ESH et par une verticalité du signal qui traduit une vitesse du transfert électronique rapide entre $O_2$ et la phthalocyanine de cobalt.

En revanche, contrairement au carbone vitreux, le dioxygène se réduit très difficilement sur le nickel. En effet, comme le montre la figure 4, la réduction de $O_2$ sur du nickel pur n'apparaît pas dans le domaine de potentiel représenté. La réduction du dioxygène devient effective bien en dessous de -0,6 V/ESH. Le greffage des phthalocyanines sur la surface du nickel montre toute leur efficacité puisque le signal obtenu est quasiment identique à celui obtenu sur le carbone vitreux (voir figure 3). Le signal présente la même verticalité avec une augmentation du début du signal d'une cinquantaine de millivolts.

Ainsi, le greffage des catalyseurs est avantageux sur du carbone et très efficace sur un matériau métallique tel que le nickel. Cette technique permet d'obtenir une électrode de type métallique dont les propriétés vis-à-vis de la réduction du dioxygène sont très proches du platine. Or, le platine étant particulièrement onéreux, le procédé selon l'invention permet donc de produire des catalyseurs de faible coût, capables de réduire le dioxygène à un potentiel satisfaisant. Le matériau catalytique crée peut donc être utilisé comme électrode dans des piles à combustibles et batteries.

6. 3. Synthèse supportée de peroxyde d'hydrogène $H_20_2$ par électrolyse en percolation.

La synthèse industrielle du peroxyde d'hydrogène est classiquement réalisée par oxydation de la 2-alkyl anthrahydroquinone (A) par le dioxygène, sous un fort bullage. Cette oxydation conduit à la formation de 2-alkylanthraquinone (B) accompagné d'une libération de peroxyde d'hydrogène. La 2-alkyl anthrahydroquinone (A) est régénérée par réduction de la 2-alkylanthraquinone (B) sous atmosphère de dihydrogène. L'étape de réduction est habituellement catalysée par un métal. Ce cycle est répété successivement pour la production industrielle de peroxyde d'hydrogène et est représenté ci-dessous.

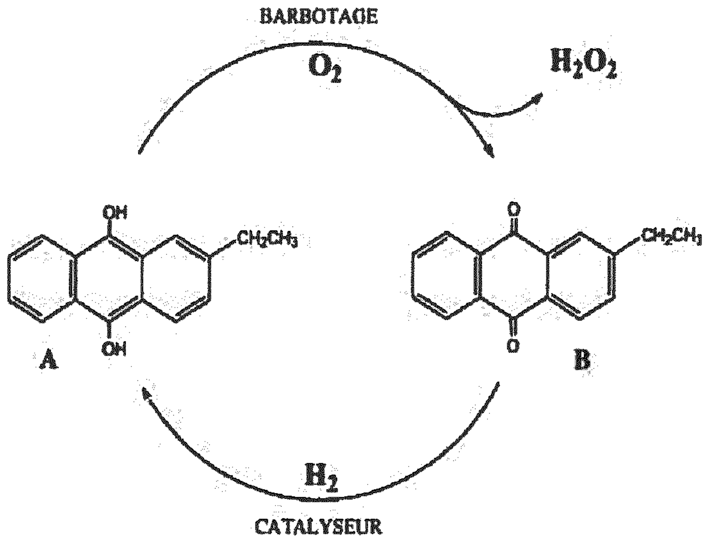


Grâce au procédé selon l'invention, il est désormais possible de proposer un procédé alternatif de synthèse du peroxyde d'hydrogène. En d'autres termes, la présente invention permet de réaliser la synthèse industrielle de peroxyde d'hydrogène par une électrolyse en percolation dans laquelle le composé (A) est bloquée sur une électrode poreuse. Ce procédé permet de régénérer la molécule (A) électrochimiquement et sans avoir recours à une atmosphère de dihydrogène. Plus précisément, la 2-alkyl anthrahydroquinone est greffée sur une électrode. Une seconde électrode est greffée par la 2-aminoanthraquinone, conformément au procédé selon l'invention, et joue ici le rôle de catalyseur. La réaction d'oxydo-réduction entre les deux électrodes est représentée ci-dessous :

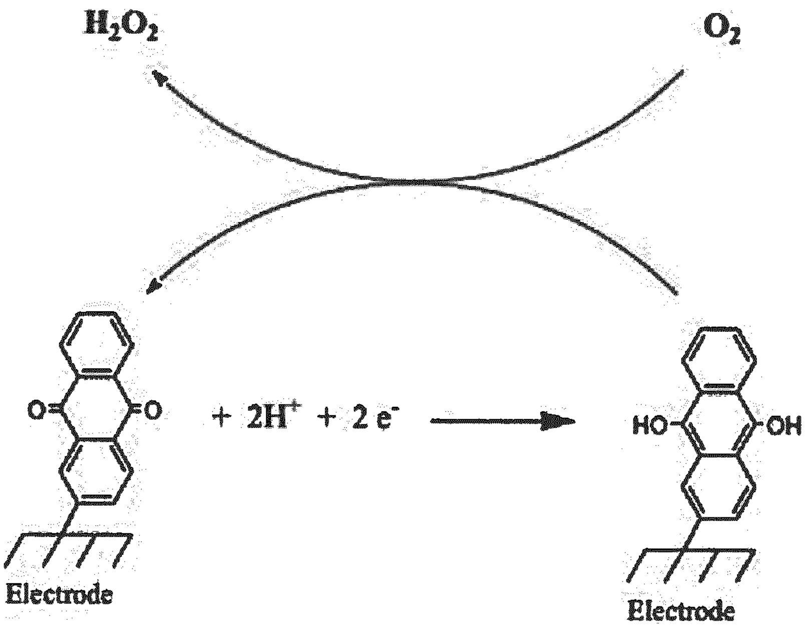


Les sels de diazonium sont formés à partir de la fonction amine en position 2 de la 2-aminoanthraquinone. La composition de greffage est la suivante :

- 98 % de DMF contenant de la 2-aminoanthraquinone à $10^{-3}$ mol.$L^{-1}$ et du $NaBF_4$ à 0,25 mol.L-1.
- 1 % d'une solution aqueuse de nitrite de sodium de concentration 1 mol.$L^{-1}$.
- 1 % d'une solution d'acide sulfurique de concentration 0,5 mol.L-1.

Le procédé d'électrogreffage selon l'invention a été mis en oeuvre sur une électrode de nickel à pH7.
La réduction électrochimique du dioxygène ($O_2$) conduit à la formation du peroxyde d'hydrogène ($H_2O_2$) selon la réaction (1) réversible :

$$O_2 + 2H^+ + 2e^- \rightarrow H_2O_2 \text{ (1) } E° = 0,69 \text{ V/ESH.}$$

Sur les métaux de transition cette réaction est cinétiquement lente ce qui se traduit par une faible quantité de $H_2O_2$ formé. Sur les métaux nobles et particulièrement pour le platine, le peroxyde d'hydrogène une fois formé est réduit en majorité en eau selon la réaction (2) :

$$H_2O_2 + 2H^+ + 2e^- \rightarrow 2\ H_2O \text{ (2) } E° = 1,73 \text{ V/ESH.}$$

L'utilisation de l'anthraquinone comme catalyseur d'oxydo-réduction permet de réaliser quantitativement et uniquement la réaction (1) de synthèse électrochimique du peroxyde d'hydrogène et ceci sur tous les matériaux conducteurs capables de fixer le catalyseur.

La figure 5 rend compte du fonctionnement de l'anthraquinone greffée sur une électrode de nickel. Sur du nickel non modifié, la réduction du dioxygène n'est pas effective. En revanche, en présence du catalyseur greffé, la réduction du dioxygène apparaît. Dès le début du deuxième cycle, lorsque le potentiel varie vers les potentiels anodiques, l'oxydation du peroxyde d'hydrogène formé à l'électrode est reprise pour être oxydé en dioxygène. La formation de peroxyde d'hydrogène sous un bullage de $O_2$ est confirmée par l'analyse d'une solution de peroxyde d'hydrogène dans laquelle l'électrode de nickel modifiée est testée (voir figure 6).

Une variation du potentiel est effectuée d'une valeur initiale (Ei = -0,15 V/ESH) vers une valeur anodique supérieure (Ea) suivi d'un retour vers un potentiel cathodique Ec de valeur - 0,65 V/ESH. La borne anodique (Ea) se trouve dans le domaine d'oxydation du peroxyde d'hydrogène. Ainsi, plus la borne anodique est élevée et plus la quantité de dioxygène formé à l'électrode est importante. En conséquence, lors du cycle retour, la réduction du dioxygène formé à l'électrode se produit et l'intensité du courant de réduction augmente parallèlement à celle de la borne anodique.

Le procédé de synthèse de peroxyde d'hydrogène développé à partir du procédé selon l'invention présente de nombreux avantages :

- pas d'utilisation de dihydrogène ($H_2$) ;
- pas de séparation du ou des catalyseurs, la solution de peroxyde d'hydrogène étant obtenue en sortie de cellule électrochimique ;
- le degré de la solution de peroxyde d'hydrogène est directement fonction du contrôle de l'intensité du courant appliqué à l'électrode négative ;
- selon le matériau support utilisé la solution de peroxyde peut-être synthétisée en solution acide ou bien en solution basique : le procédé est donc facilement adaptable :
- une partie du dioxygène nécessaire au fonctionnement du procédé est apporté par le système d'électrolyse, et plus précisément, à partir de l'oxydation de l'eau qui a lieu sur la contre électrode (électrode positive) ; et
- l'anthraquinone est une molécule stable grâce à sa structure moléculaire très robuste et qui par conséquence, comme catalyseur redox, possède un temps de vie très élevé.

## Revendications

1. Procédé de revêtement d'un matériau organique ou métallique par greffage covalent d'au moins un composé organique A possédant au moins un groupe aromatique substitué par une fonction diazonium, sur une surface dudit matériau, **caractérisé en ce que** ledit matériau est poreux ou fibrillaire et présente une surface géométrique d'au moins 10 $cm^2$ de matériau ; et **en ce qu'**il comprend une étape d'imposition en continu d'un courant non nul pulsé selon un mode intensiostatique à la surface du matériau pour réduire électrochimiquement l'ion ou les ions diazonium.

2. Procédé selon la revendication 1, **caractérisé en ce que** l'étape d'imposition d'un courant non nul pulsé est réalisée par cycles successifs, chaque cycle comprenant:

   - une phase de greffage de durée $\Delta t_1$ lors de laquelle l'intensité du courant ($i_1$) appliqué est choisie de manière à polariser la surface du matériau à un potentiel $E_1$ permettant la réduction du sel de diazonium et le greffage du groupe aromatique substitué par ledit sel de diazonium sur la surface dudit matériau, pendant une durée d'imposition $\Delta t_1$ non nulle, et
   - une phase de repos de durée $\Delta t_2$ lors de laquelle l'intensité du courant appliqué ($i_2$) est inférieure à l'intensité $i_1$, pendant une durée de repos $\Delta t_2$ non nulle.

3. Procédé selon la revendication 2, **caractérisé en ce que** la valeur de l'intensité $i_1$ est donnée en ampère, par la

relation suivante:

$$i_1 = k \times m,$$

où :

- m = la masse du matériau organique ou métallique en gramme,
- k = 2 ampères par gramme de matériau métallique et k = 5 ampères par gramme de matériaux organiques.

**4.** Procédé selon la revendication 2 ou 3, **caractérisé en ce que** la valeur de l'intensité $i_2$ est inférieure ou égale à 0,05 fois la valeur de l'intensité $i_1$.

**5.** Procédé selon l'une quelconque des revendications 2 à 4, **caractérisé en ce que** la durée d'imposition $\Delta t_1$ est donnée par la relation suivante:

$$\Delta t_1 = k_t \times t_b,$$

dans laquelle :

- $k_t = (A) / C_{min}$, où (A) représente la concentration du composé organique A en mole par litre et $C_{min}$ représente la concentration minimale en ions diazonium, et
- $t_b$ représente une valeur constante en temps.

**6.** Procédé selon l'une quelconque des revendications 2 à 5, **caractérisé en ce que** la durée d'imposition $\Delta t_1$ est comprise entre 100 microsecondes et 30 secondes, de préférence de 0,5 à 10 secondes et/ou la durée de repos $\Delta t_2$ est comprise entre 1 seconde et 5 minutes.

**7.** Procédé selon l'une quelconque des revendications 1 à 6, **caractérisé en ce que** le matériau est un matériau organique choisi parmi les mousses, les feutres, les superpositions de tissus, de préférence les feutres de fibres de carbone et les feutres de fibres de graphite.

**8.** Procédé selon la revendication 7, **caractérisé en ce qu'**il comprend une étape de métallisation du matériau organique par électrodéposition d'au moins un métal, de préférence réalisée in situ, en amont de la mise en oeuvre du procédé selon l'invention.

**9.** Procédé selon l'une des revendications 1 à 6, **caractérisé en ce que** le matériau est un matériau métallique choisi parmi les métaux présentant un potentiel standard mesuré par électrode standard à hydrogène à 25°C inférieur à zéro, de préférence l'étain, l'indium, le molybdène, le gallium, le vanadium, le nickel, le cobalt, le thallium, le cadmium, le fer, le bismuth, le chrome, le zinc, de préférence le nickel, le cobalt, cuivre.

**10.** Procédé selon l'une quelconque des revendications 1 à 9, **caractérisé en ce que** le composé organique A est choisi parmi les molécules insolubles ou très peu solubles dans l'eau et comportant au moins une fonction aryl amine, avant diazotation.

**11.** Procédé selon la revendication 10 dans lequel le composé organique A est choisi parmi les catalyseurs macrocycliques possédant un centre métallique au centre de la molécule et appartenant aux familles des phtalocyanines, porphyrines, calixarènes, éther couronnes et cyclopeptides.

**12.** Procédé selon l'une des revendications 1 à 11, **caractérisé en ce qu'**il est mis en oeuvre dans un milieu approprié comprenant un solvant protique, un solvant aprotique et un électrolyte-support.

**13.** Procédé selon la revendication 12, **caractérisé en ce que** le solvant aprotique est un solvant organique, **en ce que** le solvant protique est de l'eau et **en ce que** le milieu approprié est un mélange solvant organique / eau dans un rapport volumique d'au moins 90/10.

**14.** Matériau organique ou métallique, poreux ou fibrillaire, présentant une surface géométrique d'au moins 10 $cm^2$ de matériau revêtu selon le procédé tel que défini dans l'une des revendications 1 à 13.

## Patentansprüche

**1.** Verfahren zur Beschichtung eines organischen oder metallischen Materials durch kovalentes Pfropfen von zumindest einer organischen Verbindung A, welche mindestens eine durch eine Diazoniumfunktion substituierte aromatische Gruppe besitzt, auf eine Oberfläche des besagten Materials, **dadurch gekennzeichnet, dass** das besagte Material porös oder fibrillär ist und eine geometrische Oberfläche von mindestens 10 $cm^2$ des Materials aufweist; und dadurch, dass es einen Schritt eines Anlegens umfasst, bei dem ein pulsierter Nicht-Nullstrom in einer intensiostatischen Weise an die Oberfläche des Materials zum elektrochemischen Reduzieren des bzw. der Diazoniumions oder -ionen kontinuierlich angelegt wird.

**2.** Verfahren nach Anspruch 1, **dadurch gekennzeichnet, dass** der Schritt eines Anlegens eines pulsierten Nicht-Nullstroms durch sukzessive Zyklen realisiert wird, wobei jeder Zyklus umfasst:

- eine Pfropfphase der Dauer $\Delta t_1$, bei der die Stromstärke ($i_1$) angewandt wird, welche so ausgewählt ist, dass die Oberfläche des Materials an ein Potential $E_1$ gepolt wird, sodass dies die Reduktion des Diazoniumsalzes und das Pfropfen der durch das besagte Diazoniumsalz substituierten aromatischen Gruppe auf die Oberfläche des besagten Materials erlaubt, während einer Anlegedauer $\Delta t_1$, welche nicht Null ist, und
- eine Ruhephase der Dauer $\Delta t_2$, bei der eine Stromstärke ($i_2$) angewandt wird, welche kleiner ist als die Stromstärke $i_1$, während einer Ruhedauer von $\Delta t_2$, welche nicht Null ist.

**3.** Verfahren nach Anspruch 2, **dadurch gekennzeichnet, dass** der Wert der Stromstärke $i_1$ in Ampere gegeben ist, durch die folgende Beziehung:

$$i_1 = k \times m,$$

wobei:

- m = die Masse des organischen oder metallischen Materials in Gramm,
- k = 2 Ampere pro Gramm für metallische Materialien und k = 5 Ampere pro Gramm für organische Materialien.

**4.** Verfahren nach Anspruch 2 oder 3, **dadurch gekennzeichnet, dass** der Wert der Stromstärke $i_2$ kleiner oder gleich dem 0,05-fachen des Wertes der Stromstärke $i_1$ ist.

**5.** Verfahren nach einem der Ansprüche 2 bis 4, **dadurch gekennzeichnet, dass** die Anlegedauer $\Delta t_1$ durch die folgende Beziehung gegeben ist:

$$\Delta t_1 = k_t \times t_b,$$

wobei:

- kt = (A) / $C_{min}$, wobei (A) die Konzentration der organischen Verbindung A in Mol pro Litern darstellt und $C_{min}$ die minimale Konzentration an Diazoniumionen darstellt und
- $t_b$ eine Zeitkonstante darstellt.

**6.** Verfahren nach einem der Ansprüche 2 bis 5, **dadurch gekennzeichnet, dass** die Anlegedauer $\Delta t_1$ zwischen einschließlich 100 Mikrosekunden und einschließlich 30 Sekunden ist, vorzugsweise von 0,5 bis 10 Sekunden und/oder die Ruhedauer $\Delta t_2$ zwischen einschließlich 1 Sekunde und einschließlich 5 Minuten ist.

**7.** Verfahren nach einem der Ansprüche 1 bis 6, **dadurch gekennzeichnet, dass** das Material ein organisches Material, ausgewählt aus Schäumen, Filzen, Geweben ist, vorzugsweise Karbonfaser-Filze und Graphitfaser-Filze.

**8.** Verfahren nach Anspruch 7, **dadurch gekennzeichnet, dass** es einen Schritt umfasst, der eine Metallisierung des organischen Materials durch Elektrotauchlackieren mit mindestens einem Metall umfasst, vorzugsweise *in-situ* realisiert, welcher der Durchführung des erfindungsgemäßen Verfahrens vorgeschaltet ist.

**9.** Verfahren nach einem der Ansprüche 1 bis 6, **dadurch gekennzeichnet, dass** das Material ein metallisches Material ist, ausgewählt aus den Metallen, welche ein durch eine Normal-Wasserstoffelektrode bei 25 °C gemessenes Standardpotential von kleiner als Null aufweist, vorzugsweise Zinn, Indium, Molybdän, Gallium, Vanadium, Nickel, Cobalt, Thallium, Cadmium, Eisen, Bismut, Chrom, Zink, vorzugsweise Nickel, Cobalt, Kupfer.

**10.** Verfahren nach einem der Ansprüche 1 bis 9, **dadurch gekennzeichnet, dass** die organische Verbindung A ausgewählt ist aus den im Wasser unlöslichen oder sehr schwer löslichen Molekülen und vor der Diazotierung zumindest mit einer Arylaminfunktion ausgestattet ist.

**11.** Verfahren nach Anspruch 10, wobei die organische Verbindung A ausgewählt ist aus den makrozyklischen Katalysatoren, welche ein metallisches Zentrum im Zentrum des Moleküls besitzen und der Familie der Phtalocyanine, Porphyrine, Calixarene, Kronenether oder Cyclopeptiden angehören.

**12.** Verfahren nach einem der Ansprüche 1 bis 11, **dadurch gekennzeichnet, dass** es in einem geeigneten Milieu umfassend ein protisches Lösungsmittel, ein aprotisches Lösungsmittel und einen Träger-Elektrolyten durchgeführt wird.

**13.** Verfahren nach Anspruch 12, **dadurch gekennzeichnet, dass** das aprotische Lösungsmittel ein organisches Lösungsmittel ist, dass das protische Lösungsmittel Wasser ist und dass das geeignete Milieu eine Organisches-Lösungsmittel/Wasser-Mischung in einem Volumenverhältnis von mindestens 90/10 ist.

**14.** Organisches oder metallisches, poröses oder fibrilläres Material, welches eine geometrische Oberfläche von mindestens 10 $cm^2$ des Materials aufweist, beschichtet nach dem Verfahren wie in einem der Ansprüche 1 bis 13 definiert.

## Claims

**1.** Method for coating with an organic or metal material by covalent grafting of at least one organic compound A with at least one aromatic group substituted by a diazonium function, on a surface of the said material, **characterised in that** the said material is porous or fibrillar, and has a geometric surface of at least 10 $cm^2$ of material; and **in that** it comprises a step of continuous imposition of a non-zero current which is pulsed according to an intensiostatic mode on the surface of the material, in order to reduce the diazonium ion(s) electrochemically.

**2.** Method according to claim 1, **characterised in that** the step of imposition of a non-zero pulsed current is carried out by successive cycles, each cycle comprising:

- a grafting phase with a duration $\Delta t_1$, during which the intensity of the current ($i_1$) applied is selected such as to polarise the surface of the material at a potential $E_1$, thus permitting the reduction of the diazonium salt and grafting of the aromatic group substituted by the said diazonium salt on the surface of the said material, for a non-zero duration of imposition $\Delta t_1$; and
- a phase of rest with a duration $\Delta t_2$, during which the intensity of the current applied ($i_2$) is lower than the intensity $i_1$ during a non-zero duration of rest $\Delta t_2$.

**3.** Method according to claim 2, **characterised in that** the value of the intensity $i_1$ is given in amperes by the following equation:

$$i_1 = k \times m,$$

where:

- m = the mass of the organic or metal material in grams;
- k = 2 amperes per gram of metal material, and k = 5 amperes per gram of organic materials.

**4.** Method according to claim 2 or 3, **characterised in that** the value of the intensity $i_2$ is lower than, or equal to, 0.05 times the value of the intensity $i_1$.

**5.** Method according to any one of claims 2 to 4, **characterised in that** the duration of imposition $\Delta t_1$ is provided by the following equation:

$$\Delta t_1 = k_t \times t_b,$$

in which:

- $kt = (A) / C_{min}$, where (A) represents the concentration of the organic compound A in moles per litre, and $C_{min}$ represents the minimum concentration in diazonium ions; and
- $t_b$ represents a constant value in time.

**6.** Method according to any one of claims 2 to 5, **characterised in that** the duration of imposition $\Delta t_1$ is between 100 microseconds and 30 seconds, and preferably from 0.5 to 10 seconds, and/or the duration of rest $\Delta t_2$ is between 1 second and 5 minutes.

**7.** Method according to any one of claims 1 to 6, **characterised in that** the material is an organic material selected from amongst foams, felts, or superimpositions of fabrics, and preferably the felts of carbon fibres and the felts of graphite fibres.

**8.** Method according to claim 7, **characterised in that** it comprises a step of metallisation of the organic material by electrodeposition of at least one metal, preferably carried out in situ, upstream from the implementation of the method according to the invention.

**9.** Method according to one of claims 1 to 6, **characterised in that** the material is a metal material selected from amongst the metals which have a standard potential measured by a standard electrode with hydrogen at 25°C below zero, preferably tin, indium, molybdenum, gallium, vanadium, nickel, cobalt, thallium, cadmium, iron, bismuth, chromium, zinc, and preferably nickel, cobalt, copper.

**10.** Method according to any one of claims 1 to 9, **characterised in that** the organic compound A is selected from amongst molecules which are insoluble or have very low solubility in water, and comprise at least one aryl amine function before diazotisation.

**11.** Method according to claim 10, wherein the organic compound A is selected from amongst macrocylic catalysts with a metal centre at the centre of the molecule, and belonging to the families of the phthalocyanines, porphyrins, calixarenes, crown ethers and cyclopeptides.

**12.** Method according to one of claims 1 to 11, **characterised in that** it is implemented in an appropriate medium comprising a protic solvent, an aprotic solvent, and a support electrolyte.

**13.** Method according to claim 12, **characterised in that** the aprotic solvent is an organic solvent, **in that** the protic solvent is water, and **in that** the appropriate medium is an organic solvent / water mixture with a volume ratio of at least 90/10.

**14.** Porous or fibrillar organic or metal material, with a geometric surface of at least 10 $cm^2$ of material coated according to the method as defined in one of claims 1 to 13.

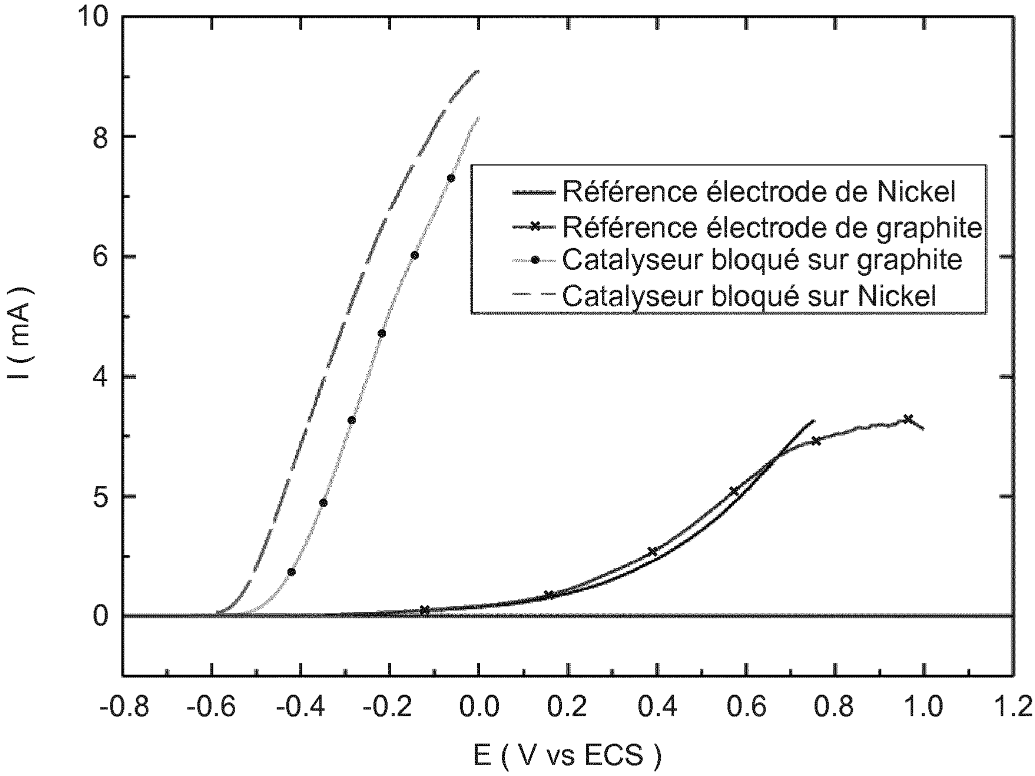
Référence électrode de Nickel
Référence électrode de graphite
Catalyseur bloqué sur graphite
Catalyseur bloqué sur Nickel
I ( mA )
E ( V vs ECS )
10
8
6
4
5
0
-0.8
-0.6
-0.4
-0.2
0.0
0.2
0.4
0.6
0.8
1.0
1.2

Fig. 1

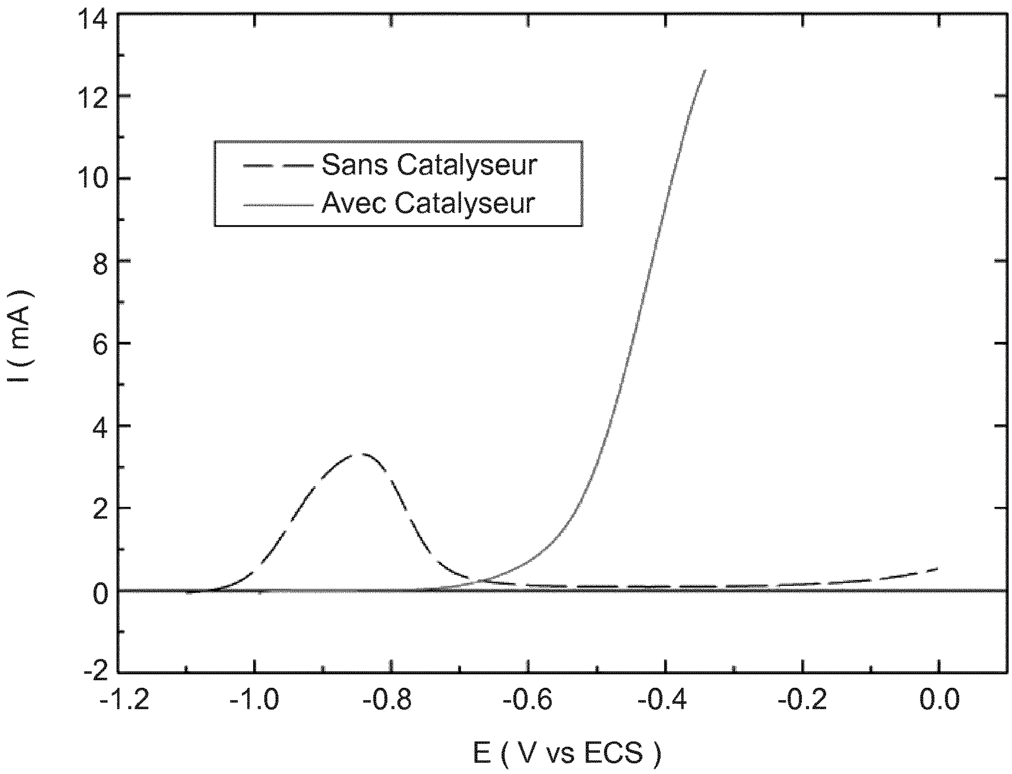
Sans Catalyseur
Avec Catalyseur
I ( mA )
E ( V vs ECS )
14
12
10
8
6
4
2
0
-2
-1.2
-1.0
-0.8
-0.6
-0.4
-0.2
0.0

Fig. 2

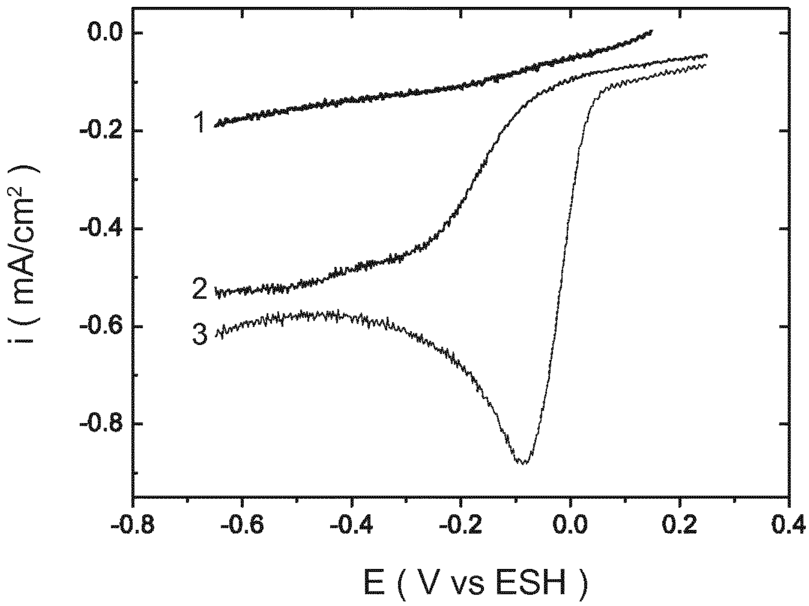


1 Solution référence sans $O_2$
2 Réduction de $O_2$ sur carbone vitreux
3 Réduction de $O_2$ sur carbone vitreux modifié

Fig. 3

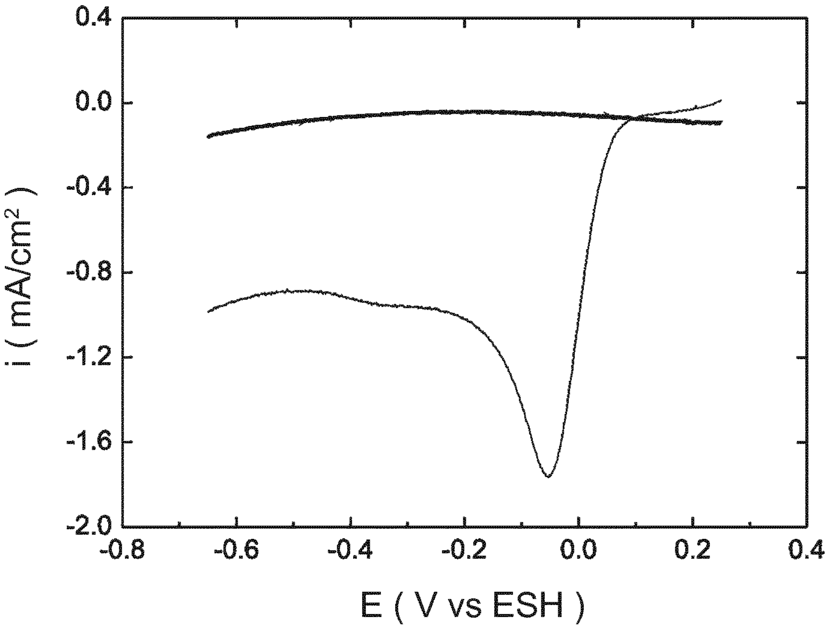


Réduction de $O_2$ sur nickel
Réduction de $O_2$ sur nickel modifié

Fig. 4

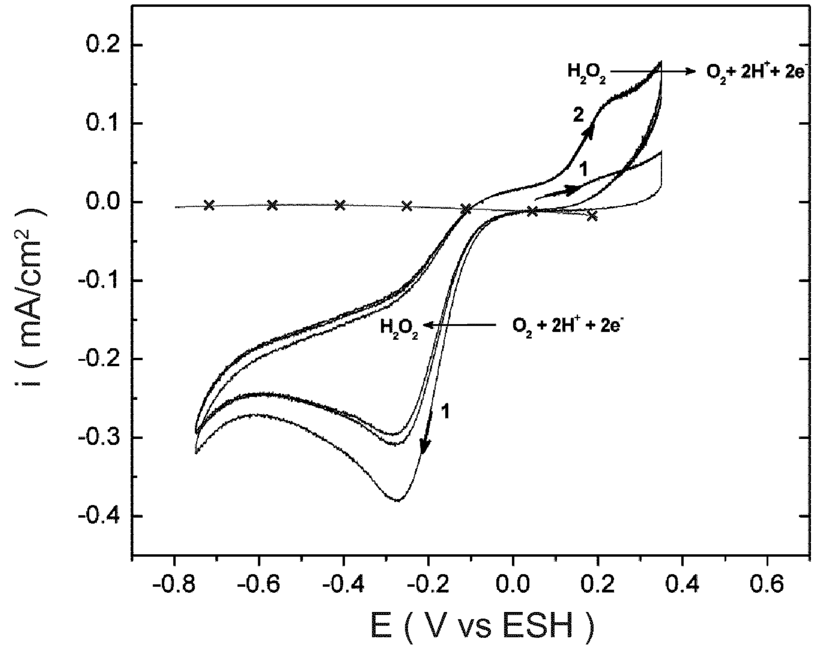


—×— Bullage de $O_2$ sur une électrode de nickel non modifié

—— Bullage de $O_2$ sur une électrode de nickel modifié

Fig. 5

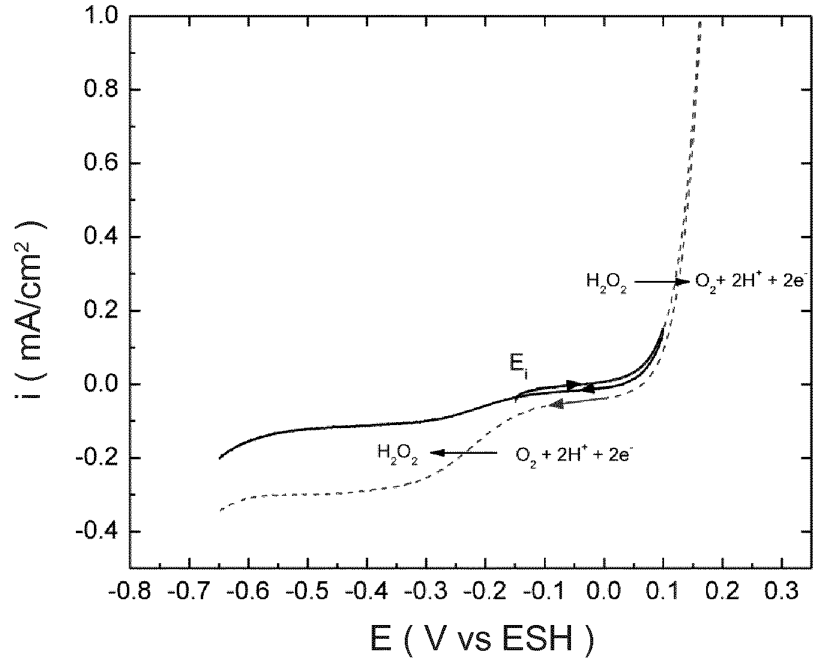


—— Borne anodique supérieure, $E_a$ = -0,1 V/ESH

-------- Borne anodique supérieure, $E_a$ = 0,2 V/ESH

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9213983 A
- WO 0159178 A
- FR 0213034
- FR 2846012
- FR 1155040


### Littérature non-brevet citée dans la description


- **ESTELLE COULON et al.** Electrochemical Attachment of Organic Groups to Carbon Felt Surfaces. *Langmuir,* 2001, vol. 17 (22), 7102-7106